# EUROPEAN PATENT SPECIFICATION

(11) **EP 3 251 486 B1**
(45) Date of publication and mention of the grant of the patent: **27.03.2019**
(21) Application number: 17173758.8
(22) Date of filing: 31.05.2017
(51) Int. Cl.: A01C 3/00, C02F 11/12, B30B 9/12, B30B 15/34, C05F 3/00, C02F 11/18

(54) **UNIT, SYSTEM AND METHOD FOR SEPARATING MANURE**
EINHEIT, SYSTEM UND VERFAHREN ZUR TRENNUNG VON DUNG
UNITÉ, SYSTÈME ET PROCÉDÉ DE SÉPARATION DE FUMIER

(30) Priority: 31.05.2016 SE 1650754
(43) Date of publication of application: 06.12.2017
(73) Proprietor: Agrilogik AB, 211 19 Malmö (SE)
(72) Inventor: Celander, Filip, 212 18 Malmö (SE); Haglund, Johan, 121 53 Johanneshov (SE)
(74) Representative: Ström & Gulliksson AB

(56) References cited:
- DE-A1- 2 516 449
- DE-C- 570 165
- NL-A- 8 303 338

## Description

### TECHNICAL FIELD

The present invention relates to a unit, a system and a method for separating manure masses into a wet phase and a dry phase.

### BACKGROUND

Farms having animals produces large amount of manure, such as farmyard manure and farm slurry. Unprocessed manure requires large storing spaces and may generate unwanted odors, which both can be of great problem to the farmer.

Large industrial farms usually separate manure into a wet phase and a dry phase in order to obtain manurial matter that is easier to handle. Separated manure reduces the storage volume and the expense of the otherwise needed frequent transportation of the manure if the storage space isn't sufficient. Another potential benefit of the separation of the separation is the reduction in odors. Furthermore, the dry phase of manure can be re-used as a bedding material for the animals which has both environmental and economical benefits. There are thus many benefits of separating manure into a wet and dry phase. However, small to medium sized farms does not generally have the economy to buy these expensive prior art separating systems.

There is thus a need for an improved separating device which is less expensive, more flexible and user-friendly.

A mobile unit for separating manure masses is disclosed in NL 8 303 338 A.

### SUMMARY

It is an object of the teachings of this application to overcome the problems listed above by providing a mobile unit for separating manure masses into a wet phase and a dry phase.

According to a first aspect, a mobile unit is provided comprising a separating device configured for receiving manure masses as an input and providing an output by separating the manure masses into a wet phase and a dry phase, a sanitation device and a housing being provided with at least one wheel, wherein the separating device and the sanitation device are arranged inside said housing and wherein the sanitation device is configured for sanitizing at least the separating device. The mobile unit further comprise an inlet through which the manure masses to be separated enter the mobile unit and a liquid outlet through which the wet phase of the manure masses is transported out from the mobile unit. The mobile unit further comprises a controller configured to receive temperature measurement from the at least one temperature measuring sensor, and in response thereto control the temperature of at least one of the separating device, the inlet and the liquid outlet so that a desired temperature is obtained for a predetermined period of time.

The mobile unit can thus easily and safely be moved from one farm to another. This way the farmer does not have to buy an expensive stationary separating device but can sign on a subscription allowing the farmer to use the mobile device for example two days each month. The separated dry phase of the manure can be used as bedding for the farm animals. In this way the farm owner can become self-sufficient in bedding material. The mobile unit thus provides several economical benefits as well as environmental benefits.

Furthermore, the handling of manure is more resource-efficient if the separator is arranged on the farm. Additionally, the process of spreading the separated manure as nutrients on the field will have a reduced emission of nitrogen compared to spread unprocessed manure.

Additionally, having a sanitation device with a regulating system provides a mobile unit that is more user-friendly and more flexible to use. By having a mobile unit with an integrated sanitation device, the mobile unit can easily and safely be moved from one farm to another without needing to first move the mobile unit to a special sanitation station. The integrated sanitation device further allows the farmer to have the mobile unit cleaned whenever he/she wants without needing to contact a sanitation service and/or needing to move the mobile unit to a sanitation station. Additionally, the regulating system provides a safe and efficient sanitation that reduces the risk of using too low or too high temperatures during the sanitation process.

The sanitation device may be configured for sanitizing internal parts of the separating device, the inlet and the liquid outlet. The sanitation device may comprise at least one heating element and a fan.

It is also an object of the teachings of this application to overcome the problems listed above by providing a system comprising a mobile unit such as above. The system further comprises a pump for pumping the manure to be separated from a first storage to the mobile unit.

It is a further object of the teachings of this application to provide a method for separating manure masses into a wet phase and a dry phase. The method comprises the steps of providing a mobile unit such as above at a first location, pumping the manure into the mobile unit, separating the manure into a wet phase and a dry phase using the separating device arranged in the mobile unit, and sanitizing at least the separating device of the mobile unit.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

Embodiments of the invention will be described in the following; reference being made it the appended drawings which illustrate non-limiting examples of how the inventive concept can be reduced into practice.
Fig. 1 is a schematic view of a system comprising a mobile unit;
Fig. 2 is an isometric view of a mobile unit;
Fig. 3 is an isometric view of a mobile unit where its housing is hidden;
Fig. 4 is an isometric view of a mobile unit where its housing is hidden;
Fig. 5 is a schematic view of components in a mobile unit;
Fig. 6 is a schematic block-scheme of a method of separating manure; and
Fig. 7 is a flowchart representing a method of sanitization.

### DETAILED DESCRIPTION OF EMBODIMENTS

Embodiments of the invention will be described in the following; reference being made to the appended drawings, which illustrate non-limiting examples of how the inventive concept can be reduced into practice.

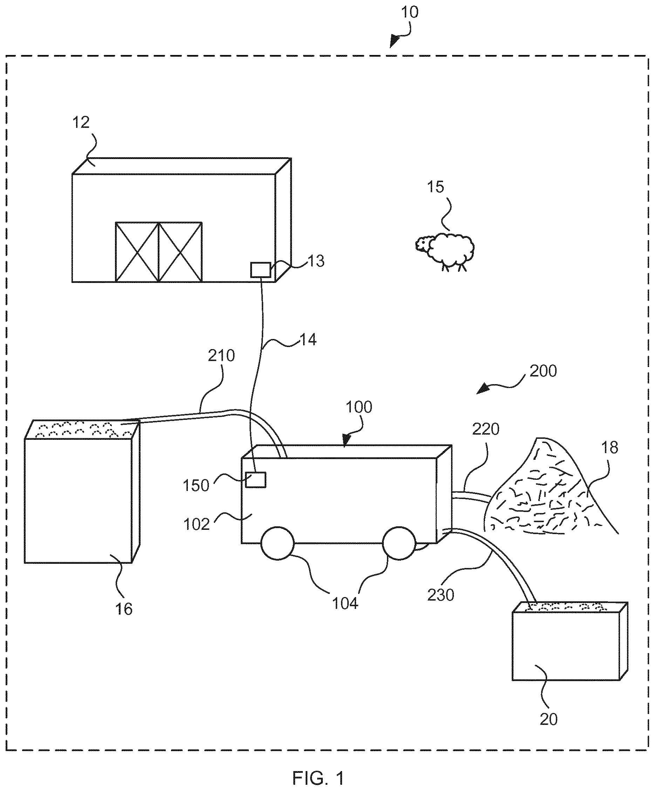

Fig. 1 shows a farm 10 with a farmhouse 12 having a plurality of livestock 15 living therein. A farm 10 having animals 15 such as livestock produce a considerable amount of manure which needs to be stored. Normally, the unprocessed manure is stored in an enclosure such as a well, a container, under-floor pits, tanks or lagoons at the farm. In Fig. 1, the unprocessed, i.e. non-separated, manure is stored in a first storage 16.

The term manure is meant to include waste animal drinking water, wash water, flush water and rain, bedding material as well as solid manure such as feces and fluid manure such as urine. Furthermore, the term manure includes both farmyard manure (FYM) and farm slurry (liquid manure).

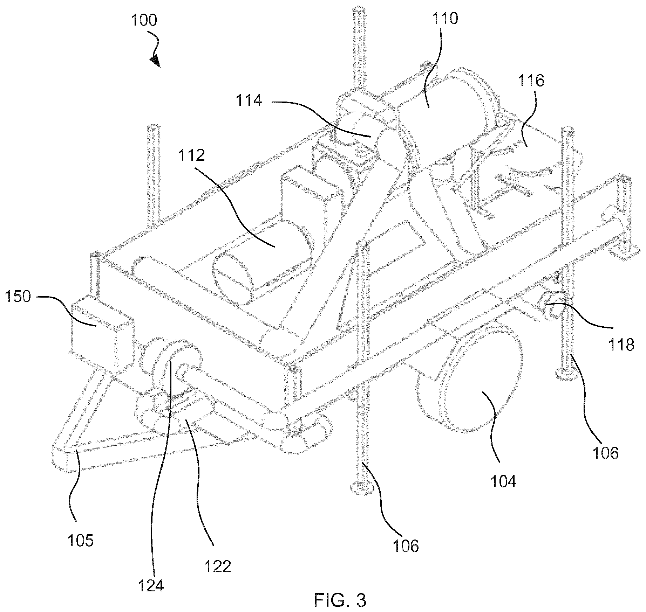

Fig. 1 further shows a system 200 for separating manure masses into a wet phase and a dry phase. The system 200 comprises a pumping device 210 and a mobile unit 100 having a housing 102 and being arranged on at least one wheel 104. The mobile unit 100 further comprises a separating device 110 for separating manure masses into a wet phase and a dry phase, which will be described more in detail with regard to Fig. 3-4.

The pumping device 210 is arranged to pump non-separated manure from the first storage 16 into the mobile unit 100 where it is separated in the separating device 110. The separated manure is transported from the mobile unit 100 to a second storage 18 and a third storage 20. The wet phase of the manure is transported to the third storage 20 which may be a liquid enclosure such as a container or a well. The dry phase is transported to the second storage 18 which take the form of a dry stack or other type of dry storage. The wet and dry phase may be transported from the mobile unit 100 into its storage 18, 20 by transport means 220, 230. The transport means 220, 230 may for example be a downpipe or conveyor band.

The pumping device 210 may be any type of conventional pump suitable to move fluids and slurries such as manure. Such a pump is known to the skilled person and will not be described further.

Once the mobile unit 100 is installed on a farm 10 it may be powered by the farmhouse 12 or a corresponding building having electricity. A power cord 14 is at one end attached to a socket 13 in/on a building on the farm 10 and the other end is attached to a control system 150 arranged on the mobile unit 100. In this way the mobile unit 100 and its electrical components may receive sufficient electricity. The control system 150 comprises a distribution board, preferably arranged on the outside of the housing 102 to allow easy access. The control system 150 divides electrical power into subsidiary circuits so as power the different electrical components in the mobile unit 100.

In another embodiment the mobile unit 100 and its electronic components are self-sufficient in electricity by for example a combustion engine arranged in the mobile unit 100 (not shown).

One benefit of the teachings herein lies in that the mobile unit 100 can be easily and safely moved from one farm to another. This way the farmer does not have to buy an expensive stationary separating device but can sign on a subscription allowing the farmer to use the mobile device 100 for example two days each month. In order for the mobile unit 100 to be movable between different farms the mobile unit 100 comprises at least one wheel 104. The movement of the mobile unit 100 may be achieved in different ways.

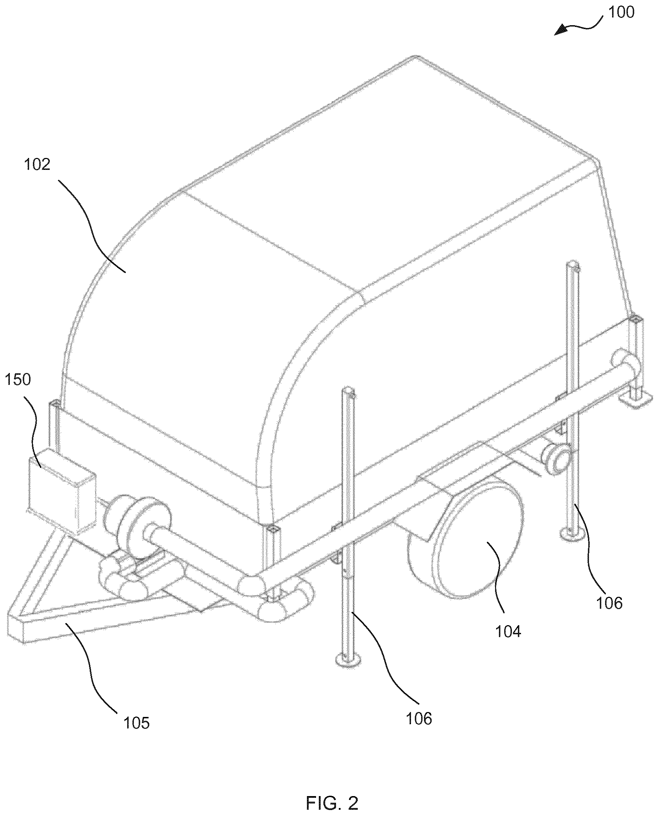

In one embodiment as shown in Fig. 2, the mobile unit 100 is an unpowered vehicle such as a trailer or the like which may be towed by a powered vehicle in order for it to be moved from one location to another. The unpowered vehicle may for example be a travel trailer, semi-trailer or a livestock-trailer which has been remodeled to accommodate a separator.

In the embodiment shown in Fig. 2, the mobile unit comprises one pair of wheels 104 and one drawbar or hitch 105 suitable to be attached to a powered vehicle when being toweled. Although not shown, the unpowered vehicle 100 may have only one wheel, three wheels or two pairs of wheels 104.

In another embodiment the mobile unit 100 is a powered vehicle such as a car, truck or the like which has been remodeled to accommodate a separator. The powered vehicle comprises at least two wheels which are driven by an electric motor or an internal combustion engine to thereby apply a driving force to the mobile unit 100.

The housing 102 may be constructed as having one or more openable doors or windows to ease inspection and maintenance of the components arranged inside the housing 102. Furthermore, the housing 102 may be arranged with a one or a plurality of support legs 106 which is used to fixate the mobile unit 100 to one position. Once the mobile unit 100 is in its correct location, the support legs 106 are lowered down to the ground. Once it is time to move the movable unit 100 to another farm, the support legs 106 are retracted from the ground so that the wheels are allowed to move. The support legs 106 are retracted and/or lowered mechanically or manually. If the support legs 106 are retracted mechanically the support legs may be in communication with the control system 150 of the mobile unit 100. The housing 102 may further comprise a mechanical button which when pressed retracts/lowers the support legs 106.

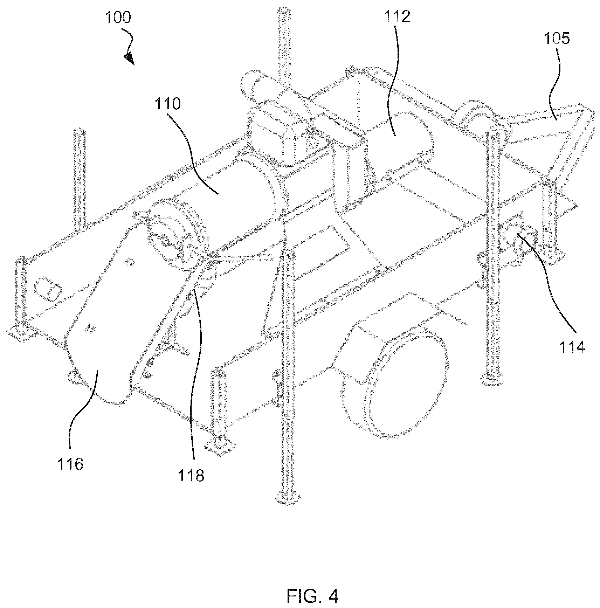

Fig. 3 and 4 shows the interior of the mobile unit 100. As already mentioned the mobile unit 100 comprises a separating device 110, which may be a separator of a suitable kind. In one embodiment, the separating device 110 is a separator of a screw pressing type. The separator 110 uses pressure to press out the liquid from the manure so that a fibrous manure material is formed by the remains. Inside the housing of the separator 110 a screw is arranged which rotates and creates a pressure so that the manure is separated. The screw is arranged with a filter which lets through the liquid components but not the fibrous dry component.

Additionally, the mobile unit 100 may further comprise a first power unit 112. The power unit 112 may be an electric motor, a solar cell, a combustion engine or a rechargeable battery. In one embodiment the power unit 112 is a gear motor which is configured to turn the axis in the separator. The gear motor 112 is driven by electricity provided by the control system 150.

Although not shown, it should be noted that the mobile unit 100 does not need to have a first power unit 112 if the mobile unit is a powered vehicle and its power is transformed so as to provide the separator with energy.

The mobile unit 100 further comprises an inlet 114, a solid outlet 116 and a liquid outlet 118. The manure enter the mobile unit 100 though the inlet 114 and once separated, the wet phase of the manure is transported out from the mobile unit 100 through the liquid outlet 118 and the dry phase is transported out from the mobile unit 100 through the solid outlet 116. The inlet 114 may be formed as a funnel or a pipe which is easily adapted to an outlet of the pump.

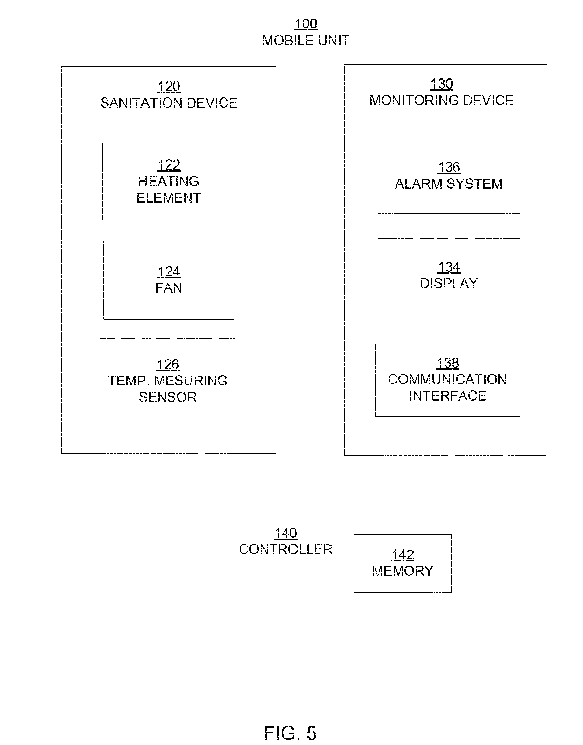

Animal manure contains pathogenic micro-organisms such as bacteria, virus and parasites which during some conditions may transmit diseases to animals and humans. Having a mobile unit 100 which can be regularly sanitized is therefore essential. The mobile unit 100 thus comprises an integrated sanitation device 120 arranged to sanitize at least the some parts of the interior of the mobile unit 100. The mobile unit 100 may also comprise a monitoring device 130, and its components shown in Fig. 5 will be discussed later on.

In one embodiment as shown in Fig. 5, the sanitation device 120 comprises a heating element 122 which utilizes a hot air flow to heat at least some parts of the inside of the housing 102 in order for the mobile unit 100 to be at least partly sanitized. The heating element 122 may be a heat exchanger, a heat pump or any other suitable heating device.

The sanitation device 120 may further comprise a fan 124, arranged inside the housing to improve the circulation of hot air. The fan moves the heated air across the interior of the housing to ensure an even distribution of the hot air.

In one embodiment, the sanitation device 120 sanitizes the interior of the separating device 110, the manure inlet 114 and the liquid outlet 118 using hot air from the heating element 122 and the fan 124. The fan 124 and the heating element 122 are arranged to blow hot air through the inlet 114 to the internal parts of the separating device 110 and the liquid outlet 118 so as to sanitize the internal parts of the separating device 110, the inlet 114 and the liquid outlet 118. This sanitation is achieved by connecting the liquid outlet to the heating element 122 and/or the fan 124. This connection may be achieved using a regular hose (not shown). The hot air moves through the inlet 114 into the separating device 100 and subsequently moves through the liquid outlet 118. In one embodiment, the liquid outlet 118 is connected to the heating element 122 so that an enclosed cavity is formed. In yet another embodiment, the hot air inside the liquid outlet 188 passes into the surrounding air outside of the mobile unit 100. In this way the interior of the separating device 110, the manure inlet 114 and the liquid outlet 118 can be sufficiently heated in order for it to be sanitized.

In an alternative embodiment, the process is reversed. Hence, the fan 124 and the heating element 122 are arranged to blow hot air through the liquid outlet 118 to the internal parts of the separating device 110 and the inlet 114 so as to sanitize the internal parts of the separating device 110, the inlet 114 and the liquid outlet 118.

The solid outlet 116 may be sanitized manually cleaning and using disinfectants or sanitizing agents. Some example of suitable disinfectants are phenolic compounds, iodine or iodophors, chlorine compounds, quaternary ammonium compound and oxidizing compounds.

In one embodiment the mobile unit 110 is pre-cleaned manually before the sanitation device 120 is activated. In this optional step, the user working at the farm uses disinfectants, sanitizing agents or some other fluid to remove the largest particles. In the next step the sanitation device 120 is activated and automatically sanitizes at least the interior of the housing.

In one embodiment the sanitation device 120 sanitizes the interior of the housing 102 by utilizing a hot air flow to heat the inside of the housing 102. In this way, all components of the housing 102 are sanitized. Due to the generated heat inside the housing 102, it is preferred if all components arranged in the interior of the mobile unit 100 are heat resistant.

The sanitation device 120 furthermore comprises at least one temperature measuring sensor 126. The temperature measuring sensor 126 may for example be a thermometer arranged to measure the temperature of at least some parts of the interior of the housing 102. In one embodiment a plurality of temperature measuring devices 132 are arranged on different positions in the interior of the housing 102. For example, where the housing 102 comprises four sides, four temperature measuring sensor 126 are arranged on each side to gain temperature information of all areas of the housing 102. The temperature measuring sensor 126 may also be arranged at different heights in the housing 102 to better get a view of the temperature inside the housing 102.

In the case where the sanitation device 120 is configured to only sanitize the interior of the separating device 110, the manure inlet 114 and the liquid outlet 118, the one or the plurality of temperature measurement sensor(s) 126 are arranged inside or in close conjunction to the separating device 100 and/or inside or in close conjunction to the manure inlet 114 and/or the liquid outlet 118.

As seen in the embodiment of Fig. 5, the mobile unit 100 further comprises a controller 140. The controller 140 may be implemented as one or more processors (CPU) or programmable logic circuits (PLC), which is connected to or comprises a memory 142. The memory 142 may be implemented using any commonly known technology for computer-readable memories such as ROM, RAM, SRAM, DRAM, CMOS, FLASH, DDR, SDRAM or some other memory technology. The memory 142 is configured to store temperature threshold values and time threshold values. The controller 140 may be arranged as a part of the control system 150 or as a separate unit being in communication with the control system 150.

The controller 140 is configured to receive a temperature measurement from at least one temperature measuring sensor 126 and in response thereto control at least some parts of the temperature of the interior of the housing 102 so that a desired temperature in the housing 102 is obtained. The temperature may be controlled in several ways. The controller 140 may control the temperature by controlling the heat generated by the heating element 122 by increasing, decreasing or maintaining its effect. The controller 140 may also be configured to adjust the intensity of the fan 124 and/or the direction of the fan 124 in response to the received temperature measurement. In one embodiment the heating element 122 and/or the fan 124 is turned off once a predetermined temperature is reached.

The heating element 122, controlled by the controller 140, heats at least some parts of the interior of the housing 102 to or above a predetermined threshold value. In one embodiment the threshold value to which the heating element 122 is heated is in the range of 50°C to 100°C, and more preferably 70°C.

The controller 140 of the mobile unit 100 may control the heating process so that the desired parts of the interior of the housing 102 (for example the separating device 110, the inlet 114 and the liquid outlet 118) is heated up to or above the threshold value for a predetermined length of time. In one embodiment the predetermined length which the mobile unit 100 is heated is between 30 minutes and 10 hours, and more preferably around 1 hour. The predetermined length of time may be seen as a minimum time which the mobile unit 100 needs to be heated in order for sufficient sanitation of the unit 100.

The setup where only one temperature measuring sensor 126 is present in the housing 102, arranged inside the sanitation device 120, will now be discussed. The controller 140 is configured to receive a temperature signal from the temperature measuring sensor 126 and to compare the temperature signal to the temperature threshold values stored in the memory 142. If the temperature signal is above the threshold temperature, the temperature in sanitation device 120 is sufficient for sanitation purposes. If the temperature is not above the threshold value, the controller may send out a signal to the heating element 122 and/or the fan 124 to increase its effect.

The next step is to determine if the temperature has been detected for a predetermined length of time. If the time threshold is not yet reached the controller sends a signal to the heating element 122 and/or the fan 124 to remain on the same effect or to increase the effect. Once the controller detects that a time threshold is reached, the controller sends out a signal to the heating element 122 and/or fan 124 to turn off the heating element 122 and/or the fan 124. In some embodiments, the fan 124 is kept on for a predetermined time after the heating element 122 has been turned on to increase cooling.

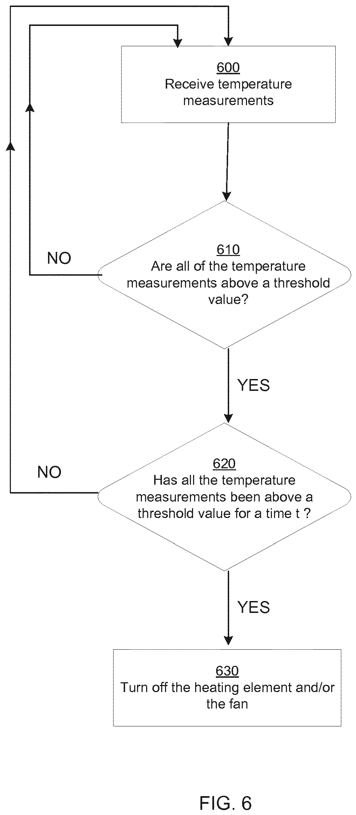

Fig. 6 illustrates an exemplified situation where several temperature measuring sensors 126 are arranged in the housing 102. The controller 140 receives 600 temperature measurements from all temperature measuring sensors 126. Using the received information, the controller checks 610 if all temperature measurements are above a threshold value. If all measurements are above the temperature threshold value, the controller checks 620 if the temperature measurements been detected to be above the threshold value for all measurements for a predetermined time. If so, the controller sends a turn off signal 630 to the heating element 122 and/or fan 12.

If the controller 140 detects that only some of the plurality of temperature measuring sensors 126 are above the threshold value, the controller may instruct the fan 124 to increase the effect and/or change its direction or wait for a predetermined period of time before requesting new temperature measurements from the temperature measuring sensors 126.

If the controller 140 detects that none of the of the plurality of temperature measuring sensors 126 are above the threshold value, the controller 140 may instruct the heating element 122 to increase its effect or wait for a predetermined period of time before requesting new temperature measurements from the temperature measuring sensors 126.

If the controller 140 detects that the temperature measurements haven't been detected to be above the threshold value for a predetermined time, the controller 140 may instruct the fan 124 to increase the effect and/or change its direction, instruct the heating element 122 to increase its effect and/or wait for a predetermined period of time before requesting new temperature measurements from the temperature measuring sensors 126.

Turning back to Fig. 5, the embodiment of the mobile unit 100 further comprises a monitoring device 130. The monitoring device 130 allows the user of the mobile unit 100, for example a farmer, to monitor the sanitation and/or the separation process.

In one embodiment the monitoring device 130 comprises one or several LED-lights. The LED-light(s) may be lit in one color indicating that the threshold temperature is reached and/or indicating in a second color that the threshold value is not reached during the sanitation process.

In one embodiment the monitoring device 130 comprises a display 134. The display 134 may be in the form of a touch display having a user-friendly interface or a non-touch display. In one embodiment the display is a touch display configured to display and operate one or more virtual keys on the touch display 520. The display 134 may be a LED-display.

In one embodiment the monitoring device 130 comprises a display 140 being in communication with the controller 140 in order to show information of the temperature measurement(s). The display 134 is arranged to show the temperature measured by the one or several temperature measuring sensor(s) 126. This may be shown by displaying the measures temperature values in digital numbers.

The monitoring device 130 may also provide information of the status of the separating device 110 and/or the sanitation device 120. The monitoring device 130 may display information regarding if the separating device 110 is active, if it is in need for maintenance and/or cleaning. The monitoring device 130 may further display information relating to if the sanitation device 120 is activated, the time the sanitation device 120 has been switched on, the temperature inside the housing 102 and/or if the temperature inside is above a predetermined threshold. The monitoring device 130 is connected to or in communication with the controller 140.

The monitoring device 130 may further comprise an alarm system 136 for providing urgent feedback to the user. If the monitoring device 130 detects that the temperature in the housing is too high, a signal is sent to the alarm system 136 which in turn triggers an alarm to the user signaling that the mobile unit 100 is in the risk of being overheated. The alarm may for example be a loud sound, a blinking lamp, a bright color or the like.

In one embodiment the monitoring device 130 further comprises a communication interface 138 for contacting the farmer with important information. The communication interface may be a wireless radio frequency interface such as a Bluetooth™ or a WiFi (IEEE802.11b standard) link. The communication interface 138 may also be a wired interface. The communication interface 138 may be configured to send an alarm as a text-message, Bluetooth signal, email or the like to the user informing him/her of the detected condition. The communication interface 138 is connected to or in communication with the controller 140.

The communication interface 138 may be configured to send information regarding the separating device 110 and/or the sanitation device 120 to a mobile communications terminal of a user (such as a farmer). The mobile communications terminal may be a mobile phone, a tablet computer, a personal digital assistant, a media player, a location finding device or generally any hand-held, user-carried or user-worn device capable of communicating with other devices.

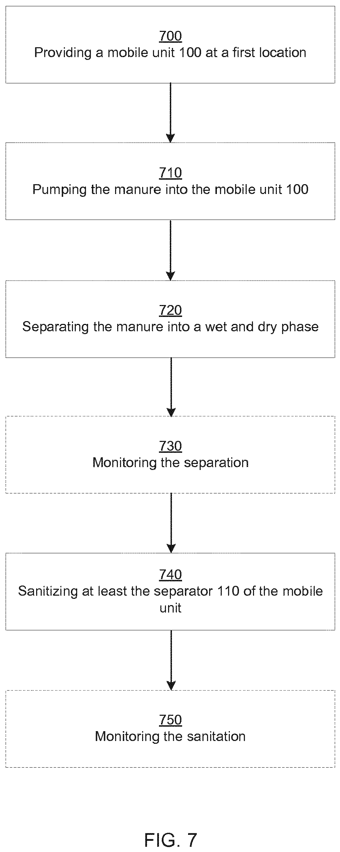

Fig. 7 shows a schematic view of a method of separating manure masses into a wet phase and a dry phase. First, a mobile unit 100 is provided 700 at a first location, such as a first farm. Once the mobile unit 100 is arranged at the farm, a pump arranged on said farm pumps 710 the manure into the mobile unit 100. The manure is separated 720 into a wet phase and a dry phase using a separating device 110 in the mobile unit 100. As an optional step the separation process may be monitored 730 by the user by a monitoring device 130 arranged in the mobile unit 100. Once the separation is completed, the mobile unit 100 is sanitized 740. As an optional step the sanitation process may be monitored 750 by the monitoring device 130 arranged in the mobile unit 100.

As a next step, the mobile unit 100 may be transported to a second location, such as a second, possibly neighboring, farm. The same process of separation can then be performed at that specific location.

Although the mobile unit disclosed herein has been focused on a mobile unit being coupled to an external pump, the mobile unit could comprise a pump for pumping the manure into the separating device. This could be beneficial if the farm does not want to have an own pump, perhaps due to economical or storage-saving aspects.

It should be appreciated that even though numerous characteristics and advantages of the present invention have been set forth in the foregoing description, together with details of the structure and function of the invention, the description is only illustrative and changes may be made in detail, especially in matters of shape, size and arrangement of parts within the scope of the invention to the full extent indicated by the appended claims.

## Claims

1. A mobile unit for separating manure masses into a wet phase and a dry phase, comprising:
a separating device (110) configured for receiving manure masses as an input and providing an output by separating the manure masses into a wet phase and a dry phase;
an inlet (114) through which the manure masses to be separated enter the mobile unit (100);
a liquid outlet (118) through which the wet phase of the manure masses is transported out from the mobile unit (100);
a sanitation device (120) configured for sanitizing at least the separating device (110), wherein the sanitation device (120) comprises at least one temperature measuring sensor (126) configured to measure the temperature of at least one of the separating device (110), the inlet (114) and the liquid outlet (118);
a housing (102) being provided with at least one wheel (104), wherein the separating device (110) and the sanitation device (120) are arranged inside said housing (102); and
a controller (140) configured to:
receive temperature measurement from the at least one temperature measuring sensor (126); and
in response thereto control the temperature of at least one of the separating device (110), the inlet (114) and the liquid outlet (118) so that a desired temperature is obtained for a predetermined period of time.

2. The mobile unit according to claim 1, wherein the sanitation device (120) comprises at least one heating element (122) and a fan (124).

3. The mobile unit according to claim 1 or 2, wherein the sanitation device (120) is configured for sanitizing internal parts of the separating device (110), the inlet (114) and the liquid outlet (118).

4. The mobile unit according to claim 2, wherein the fan (124) and the heating element (122) are arranged to blow hot air through the inlet (114) to the internal parts of the separating device (110) and the liquid outlet (118) so as to sanitize the internal parts of the separating device (110), the inlet (114) and the liquid outlet (118).

5. The mobile unit according to claim 2 or 4, wherein the controller (140) controls the temperature so that a desired temperature is obtained for a predetermined period of time by controlling said at least one heating element (122) and/or said at least one fan (124).

6. The mobile unit according to any of claims 2, 4 or 5, wherein the controller (140) further is configured to, in response to receiving said temperature measurement, detect if the temperature measurement(s) has been above a temperature threshold value for a predetermined period of time, and if so send a signal to turn off said at least one heating element (122) and/or said at least one fan (124).

7. The mobile unit according to any preceding claim, wherein the mobile unit (100) further comprises a monitoring device (130) configured to display information regarding the separating device (110) and/or the sanitation device (120).

8. The mobile unit according to claim 7, wherein the monitoring device (130) further comprises a communication interface (138) for communicating information regarding the separating device (110) and/or the sanitation device (120) to a user.

9. The mobile unit according to any preceding claim, wherein the separating device (110) is a separator of a screw pressing type.

10. A system for separating manure masses into a wet phase and a dry phase, wherein the system (200) comprises
a mobile unit (100) according to any of claim 1 - 9; and
a pump (210) for pumping the manure masses to be separated from a first storage (16) to the mobile unit (100).

11. A method for separating manure masses into a wet phase and a dry phase the method comprising the steps of:
providing a mobile unit (100) at a first location, wherein the mobile unit (100) comprises a separating device (110), an inlet (114) through which the manure masses to be separated enter the mobile unit (100), a liquid outlet (118) through which the wet phase of the manure masses is transported out from the mobile unit (100), a controller (140), a sanitation device (120) comprising at least one temperature measuring sensor (126) configured to measure the temperature of at least one of the separating device, the inlet (114) and the liquid outlet (118), and a housing (102) being provided with at least one wheel (104), wherein the separating device (110) and the sanitation device (120) are arranged inside said housing (102);
pumping the manure into the mobile unit (100);
separating the manure into a wet phase and a dry phase using the separating device (110) arranged in the mobile unit (100); and
sanitizing at least the separating device (110) of the mobile unit (100), wherein the controller (140) is configured to:
receive temperature measurement from the at least one temperature measuring sensor (126); and
in response thereto control the temperature of at least one of the separating device (110), the inlet (114) and the liquid outlet (118) so that a desired temperature is obtained for a predetermined period of time.

12. The method according to claim 11, wherein the method further comprises the step of monitoring the separation of the manure masses into a wet and dry phase and/or the sanitation of the mobile unit (100).

13. The method according to claim 11 or 12, wherein the method further comprises the step of:
moving the mobile unit (100) to a second location;
pumping the manure into the mobile unit (100);
separating the manure masses into a wet phase and a dry phase using the separating device (110) arranged in the mobile unit (100); and
sanitizing at least the separating device (110) of the mobile unit (100).

## Patentansprüche

1. Mobile Einheit zum Separieren von Güllemassen in eine nasse Phase und eine trockene Phase, umfassend:
eine Separiervorrichtung (110), die zum Aufnehmen von Güllemassen als Eintrag und Bereitstellen eines Austrags durch Separieren der Güllemassen in eine nasse Phase und eine trockene Phase ausgelegt ist;
einen Einlass (114), durch den die zu separierenden Güllemassen in die mobile Einheit (100) eingetragen werden;
einen Flüssigkeitsauslass (118), durch den die nasse Phase der Güllemassen aus der mobilen Einheit (100) transportiert wird;
eine Desinfektionsvorrichtung (120), die zum Desinfizieren mindestens der Separiervorrichtung (110) ausgelegt ist, wobei die Desinfektionsvorrichtung (120) mindestens einen Temperaturmesssensor (126) umfasst, der zum Messen der Temperatur an mindestens einer der Separiervorrichtung (110), des Einlasses (114) und des Flüssigkeitsauslasses (118) ausgelegt ist;
ein Gehäuse (102), das mit mindestens einem Rad (104) versehen ist, wobei die Separiervorrichtung (110) und die Desinfektionsvorrichtung (120) im Inneren des Gehäuses (102) angeordnet sind; und
eine Steuerung (140), die zu Folgendem ausgelegt ist:
Empfangen der Temperaturmessung von dem mindestens einen Temperaturmesssensor (126); und
als Reaktion darauf Steuern der Temperatur an mindestens einer der Separiervorrichtung (110), des Einlasses (114) und des Flüssigkeitsauslasses (118), sodass für einen vorbestimmten Zeitraum eine gewünschte Temperatur erhalten wird.

2. Mobile Einheit nach Anspruch 1, wobei die Desinfektionsvorrichtung (120) mindestens ein Heizelement (122) und einen Ventilator (124) umfasst.

3. Mobile Einheit nach Anspruch 1 oder 2, wobei die Desinfektionsvorrichtung (120) zum Desinfizieren von Innenteilen der Separiervorrichtung (110), dem Einlass (114) und dem Flüssigkeitsauslass (118) ausgelegt ist.

4. Mobile Einheit nach Anspruch 2, wobei der Ventilator (124) und das Heizelement (122) zum Blasen von Heißluft durch den Einlass (114) zu den Innenteilen der Separiervorrichtung (110) und dem Flüssigkeitsauslass (118) ausgelegt sind, um die Innenteile der Separiervorrichtung (110), den Einlass (114) und den Flüssigkeitsauslass (118) zu desinfizieren.

5. Mobile Einheit nach Anspruch 2 oder 4, wobei die Steuerung (140) die Temperatur derart steuert, dass durch Steuern des mindestens einen Heizelements (122) und/oder des mindestens einen Ventilators (124) für einen vorbestimmten Zeitraum eine gewünschte Temperatur erhalten wird.

6. Mobile Einheit nach einem der Ansprüche 2, 4 oder 5, wobei die Steuerung (140) weiterhin dazu ausgelegt ist, als Reaktion auf das Empfangen der Temperaturmessung zu erkennen, ob die Temperaturmessung(en) über einen vorbestimmten Zeitraum oberhalb eines Temperaturschwellenwerts lag/lagen, und, wenn dem so ist, ein Signal zum Abschalten des mindestens einen Heizelements (122) und/oder des mindestens einen Ventilators (124) zu senden.

7. Mobile Einheit nach einem der vorhergehenden Ansprüche, wobei die mobile Einheit (100) weiterhin eine Überwachungsvorrichtung (130) umfasst, die zum Anzeigen von Informationen betreffend die Separiervorrichtung (110) und/oder die Desinfektionsvorrichtung (120) ausgelegt ist.

8. Mobile Einheit nach Anspruch 7, wobei die Überwachungsvorrichtung (130) weiterhin eine Kommunikationsschnittstelle (138) zum Kommunizieren von Informationen betreffend die Separiervorrichtung (110) und/oder die Desinfektionsvorrichtung (120) an einen Benutzer umfasst.

9. Mobile Einheit nach einem der vorhergehenden Ansprüche, wobei die Separiervorrichtung (110) ein Separator vom Pressschneckentyp ist.

10. System zum Separieren von Güllemassen in eine nasse Phase und eine trockene Phase, wobei das System (200) eine mobile Einheit (100) nach einem der Ansprüche 1-9 umfasst; und
eine Pumpe (210) zum Pumpen der zu separierenden Güllemassen von einem ersten Lager (16) zur mobilen Einheit (100).

11. Verfahren zum Separieren von Güllemassen in eine nasse Phase und eine trockene Phase, wobei das Verfahren folgende Schritte umfasst:
Bereitstellen einer mobilen Einheit (100) an einem ersten Standort, wobei die mobile Einheit (100) eine Separiervorrichtung (110), einen Einlass (114), durch den die zu separierenden Güllemassen in die mobile Einheit (100) eingetragen werden, einen Flüssigkeitsauslass (118), durch den die nasse Phase der Güllemassen aus der mobilen Einheit (100) transportiert wird, eine Steuerung (140), eine Desinfektionsvorrichtung (120), die mindestens einen Temperaturmesssensor (126) umfasst, der zum Messen der Temperatur an mindestens einer der Separiervorrichtung, des Einlasses (114) und des Flüssigkeitsauslasses (118) ausgelegt ist, und ein Gehäuse (102) umfasst, das mit mindestens einem Rad (104) versehen ist, wobei die Separiervorrichtung (110) und die Desinfektionsvorrichtung (120) im Inneren des Gehäuses (102) angeordnet sind;
Pumpen der Gülle in die mobile Einheit (100);
Separieren der Gülle in eine nasse Phase und eine trockene Phase unter Verwendung der in der mobilen Einheit (100) angeordneten Separiervorrichtung (110); und
Desinfizieren mindestens der Separiervorrichtung (110) der mobilen Einheit (100), wobei die Steuerung (140) ausgelegt ist zum
Empfangen der Temperaturmessung von dem mindestens einen Temperaturmesssensor (126); und
als Reaktion darauf Steuern der Temperatur an mindestens einer der Separiervorrichtung (110), des Einlasses (114) und des Flüssigkeitsauslasses (118), sodass für einen vorbestimmten Zeitraum eine gewünschte Temperatur erhalten wird.

12. Verfahren nach Anspruch 11, wobei das Verfahren weiterhin den Schritt des Überwachens der Separation der Güllemassen in eine nasse und eine trockene Phase und/oder die Desinfektion der mobilen Einheit (100) umfasst.

13. Verfahren nach Anspruch 11 oder 12, wobei das Verfahren weiterhin folgende Schritte umfasst:
Bewegen der mobilen Einheit (100) zu einem zweiten Standort;
Pumpen der Gülle in die mobile Einheit (100);
Separieren der Güllemassen in eine nasse Phase und eine trockene Phase unter Verwendung der in der mobilen Einheit (100) angeordneten Separiervorrichtung (110); und
Desinfizieren mindestens der Separiervorrichtung (110) der mobilen Einheit (100).

## Revendications

1. Unité mobile pour séparer des masses de fumier en une phase humide et en une phase sèche, comprenant :
un dispositif de séparation (110) configuré pour recevoir des masses de fumier en tant qu'entrée et fournir une sortie en séparant les masses de fumier en une phase humide et en une phase sèche ;
une entrée (114) par laquelle les masses de fumier à séparer entrent dans l'unité mobile (100) ;
une sortie de liquide (118) par laquelle la phase humide des masses de fumier est transportée à l'extérieur de l'unité mobile (100) ;
un dispositif d'assainissement (120) configuré pour assainir au moins le dispositif de séparation (110), dans laquelle le dispositif d'assainissement (120) comprend au moins un capteur de mesure de température (126) configuré pour mesurer la température d'au moins un parmi le dispositif de séparation (110), l'entrée (114) et la sortie de liquide (118) ;
un logement (102) pourvu d'au moins une roue (104), dans laquelle le dispositif de séparation (110) et le dispositif d'assainissement (120) sont agencés à l'intérieur dudit logement (102) ; et
un dispositif de commande (140) configuré pour :
recevoir une mesure de température provenant de l'au moins un capteur de mesure de température (126) ; et
en réponse à celle-ci commander la température d'au moins un parmi le dispositif de séparation (110), l'entrée (114) et la sortie de liquide (118) de telle sorte qu'une température souhaitée est obtenue pendant une période de temps prédéterminée.

2. Unité mobile selon la revendication 1, dans laquelle le dispositif d'assainissement (120) comprend au moins un élément de chauffage (122) et un ventilateur (124).

3. Unité mobile selon la revendication 1 ou 2, dans laquelle le dispositif d'assainissement (120) est configuré pour assainir des parties internes du dispositif de séparation (110), de l'entrée (114) et de la sortie de liquide (118).

4. Unité mobile selon la revendication 2, dans laquelle le ventilateur (124) et l'élément de chauffage (122) sont agencés pour souffler de l'air chaud par l'entrée (114) vers les parties internes du dispositif de séparation (110) et de la sortie de liquide (118) de manière à assainir les parties internes du dispositif de séparation (110), de l'entrée (114) et de la sortie de liquide (118).

5. Unité mobile selon la revendication 2 ou 4, dans laquelle le dispositif de commande (140) commande la température de telle sorte qu'une température souhaitée est obtenue pendant une période de temps prédéterminée en commandant ledit au moins un élément de chauffage (122) et/ou ledit au moins un ventilateur (124).

6. Unité mobile selon l'une quelconque des revendications 2, 4 ou 5, dans laquelle le dispositif de commande (140) est en outre configuré pour, en réponse à la réception de ladite mesure de température, détecter si la ou les mesures de température étaient au-dessus d'une valeur seuil de température pendant une période de temps prédéterminée, et le cas échéant, envoyer un signal pour désactiver ledit au moins un élément de chauffage (122) et/ou ledit au moins un ventilateur (124).

7. Unité mobile selon une quelconque revendication précédente, dans laquelle l'unité mobile (100) comprend en outre un dispositif de surveillance (130) configuré pour afficher des informations concernant le dispositif de séparation (110) et/ou le dispositif d'assainissement (120).

8. Unité mobile selon la revendication 7, dans laquelle le dispositif de surveillance (130) comprend en outre une interface de communication (138) pour communiquer des informations concernant le dispositif de séparation (110) et/ou le dispositif d'assainissement (120) à un utilisateur.

9. Unité mobile selon une quelconque revendication précédente, dans laquelle le dispositif de séparation (110) est un séparateur d'un type de pressage à vis.

10. Système pour séparer des masses de fumier en une phase humide et en une phase sèche, dans lequel le système (200) comprend
une unité mobile (100) selon l'une quelconque des revendications 1-9 ; et
une pompe (210) pour pomper les masses de fumier à séparer depuis un premier dispositif de stockage (16) vers l'unité mobile (100).

11. Procédé pour séparer des masses de fumier en une phase humide et en une phase sèche, le procédé comprenant les étapes de :
fourniture d'une unité mobile (100) à un premier endroit, dans lequel l'unité mobile (100) comprend un dispositif de séparation (110), une entrée (114) par laquelle les masses de fumier à séparer entrent dans l'unité mobile (100), une sortie de liquide (118) par laquelle la phase humide des masses de fumier est transportée à l'extérieur de l'unité mobile (100), un dispositif de commande (140), un dispositif d'assainissement (120) comprenant au moins un capteur de mesure de température (126) configuré pour mesurer la température d'au moins un parmi le dispositif de séparation, l'entrée (114) et la sortie de liquide (118), et un logement (102) étant pourvu d'au moins une roue (104), dans lequel le dispositif de séparation (110) et le dispositif d'assainissement (120) sont agencés à l'intérieur dudit logement (102) ;
pompage du fumier dans l'unité mobile (100) ;
séparation du fumier en une phase humide et en une phase sèche à l'aide du dispositif de séparation (110) agencé dans l'unité mobile (100) ; et
assainissement d'au moins le dispositif de séparation (110) de l'unité mobile (100), dans lequel le dispositif de commande (140) est configuré pour :
recevoir une mesure de température provenant de l'au moins un capteur de mesure de température (126) ; et
en réponse à celle-ci commander la température d'au moins un parmi le dispositif de séparation (110), l'entrée (114) et la sortie de liquide (118) de telle sorte qu'une température souhaitée est obtenue pendant une période de temps prédéterminée.

12. Procédé selon la revendication 11, dans lequel le procédé comprend en outre l'étape de surveillance de la séparation des masses de fumier en une phase humide et en une phase sèche et/ou d'assainissement de l'unité mobile (100).

13. Procédé selon la revendication 11 ou 12, dans lequel le procédé comprend en outre l'étape de :
déplacement de l'unité mobile (100) vers un second emplacement ;
pompage du fumier dans l'unité mobile (100) ;
séparation des massages de fumier en une phase humide et en une phase sèche à l'aide du dispositif de séparation (110) agencé dans l'unité mobile (100) ; et
assainissement d'au moins le dispositif de séparation (110) de l'unité mobile (100).
